# EUROPEAN PATENT APPLICATION

(11) **EP 1 689 165 A2**
(43) Date of publication of application: **09.08.2006**
(21) Application number: 06002468.4
(22) Date of filing: 07.02.2006
(51) Int. Cl.: H04N 5/00, H04N 5/44

(54) **Apparatus and method for reproducing digital multimedia broadcast and card for receiving digital multimedia**

(30) Priority: 07.02.2005 KR 2005011251
(71) Applicant: Samsung Electronics Co., Ltd., Suwon-si, Gyeonggi-Do (KR)
(72) Inventor: Jung, Hyung-Jung, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is an apparatus for enabling a user to selectively view satellite digital multimedia broadcasts or terrestrial digital multimedia broadcasts through a single terminal, a control method thereof, and a card for receiving the digital multimedia broadcasts. The apparatus includes a first card for receiving a terrestrial digital multimedia broadcast, a second card for receiving a satellite digital multimedia broadcast, and a terminal adapted to receive either card so as to receive a digital multimedia broadcast from the inserted card and to reproduce the digital multimedia broadcast. Each card includes a receiving unit for receiving and processing a digital multimedia broadcast signal, a memory for temporarily storing data from the digital multimedia broadcast signal, an interface unit for interfacing the card and a terminal for reproducing the digital multimedia broadcast when the card is inserted into the terminal, and a node for transmitting the data to the terminal.

## Description

The present invention relates to an apparatus and method for receiving and reproducing digital multimedia broadcasts, and more particularly to an apparatus for enabling a user to selectively view satellite digital multimedia broadcasts or terrestrial digital multimedia broadcasts through a single terminal, a control method thereof, and a card for receiving the digital multimedia broadcasts.

Various terminals capable of receiving and reproducing digital multimedia broadcast (DMB) have been developed. Such terminals include a mobile equipment (ME) such as a portable wireless telephone, a personal digital assistant (PDA) that can receive and reproduce digital multimedia broadcasts, as well as terminals designed for digital multimedia broadcasts.

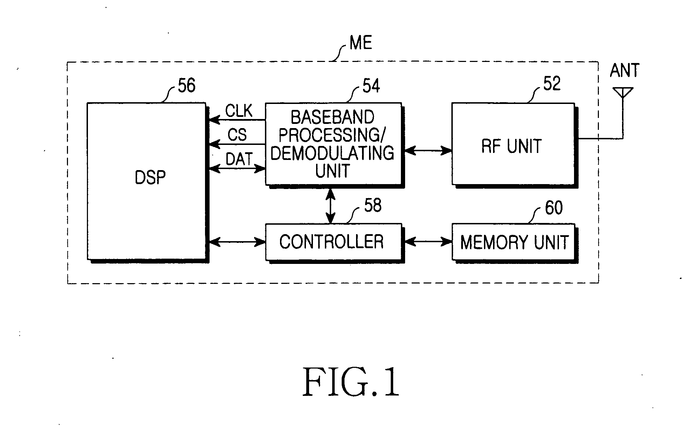

FIG. 1 is a block diagram illustrating the structure of a conventional ME for receiving and reproducing digital multimedia broadcasts.

Such equipment must include, at least, a radio frequency (RF) unit 52 for receiving digital multimedia broadcast, a demodulating unit 54, a digital signal processor (DSP) 56, a memory unit 60 and a controller 58 for controlling at least the units and processor.

Satellite digital multimedia broadcast and terrestrial digital multimedia broadcast are broadcasted through different frequencies. Therefore, an ME capable of receiving satellite digital multimedia broadcast cannot receive terrestrial digital multimedia broadcast. Similarly, an ME capable of receiving terrestrial digital multimedia broadcast cannot receive satellite digital multimedia broadcast. Consequently, a user who desires to view both types of broadcasts must have two ME units, which causes the user to incur inconvenience and an economic burden.

Accordingly, the present invention has been made to solve the above-mentioned problems occurring in the prior art.

It is the object of the present invention to provide an apparatus for enabling a user to selectively view satellite digital multimedia broadcasts or terrestrial digital multimedia broadcasts through a single terminal, a control method thereof, and a card for receiving the digital multimedia broadcasts.

This object is solved by the subject matter of the independent claims.

Preferred embodiments are defined by the subject matter of the dependent claims.

To this end, in accordance with a first aspect of the present invention, there is provided an apparatus for reproducing a digital multimedia broadcast, including two cards for receiving terrestrial and satellite digital multimedia broadcasts, respectively, and a terminal adapted to receive the either card so as to receive a digital multimedia broadcast from the inserted card and to reproduce the digital multimedia broadcast. That is, two types of cards including different RF units and demodulating units are configured, so that the user can view terrestrial and satellite digital multimedia broadcasts through a single terminal.

In accordance with a second aspect of the present invention, there is provided a method for reproducing a digital multimedia broadcast in a terminal, into which a card for receiving the digital multimedia broadcast can be inserted, the method including sensing that the card is inserted and analyzing a transmission stream packet for a digital multimedia broadcast transmitted from the card, determining whether a signal to be received is a terrestrial digital multimedia broadcast signal or a satellite digital multimedia broadcast signal, based on a result of the analysis, and controlling a terrestrial or satellite digital multimedia broadcast, according to a result of the determination.

In accordance with a third aspect of the present invention, there is provided a card for receiving a digital multimedia broadcast, the card including a receiving unit for receiving and processing a digital multimedia broadcast signal, a memory for temporarily storing data from the digital multimedia broadcast signal, an interface unit for interfacing the card and a terminal for reproducing the digital multimedia broadcast when the card is inserted into the terminal, and a node for transmitting the data to the terminal.

The present invention will be more apparent from the following detailed description taken in conjunction with the accompanying drawings, in which:
FIG 1 is a block diagram illustrating the structure of functional parts provided in a conventional ME for receiving and reproducing digital multimedia broadcasts;
FIG. 2 is a block diagram illustrating the structures of a mobile equipment for reproducing digital multimedia broadcasts and two cards for receiving different digital multimedia broadcasts according to an embodiment of the present invention;
FIG. 3 is a flowchart illustrating the procedure for processing satellite digital multimedia broadcast and terrestrial digital multimedia broadcast while distinguishing the satellite digital multimedia broadcast from terrestrial digital multimedia broadcast in the mobile equipment for reproducing the digital multimedia broadcast according to an embodiment of the present invention; and
FIG. 4 is a block diagram illustrating the structures of a mobile equipment for reproducing digital multimedia broadcasts and two cards for receiving different digital multimedia broadcasts according to another embodiment of the present invention.

Hereinafter, preferred embodiments according to the present invention will be described with reference to the accompanying drawings. It is to be noted that the same elements are indicated with the same reference numerals throughout the drawings. In the below description, many particular items, such as a detailed node name and a header value, are provided for promoting a general understanding of the present invention. However, it will be understood by those skilled in the art that the present invention can be embodied without including these particular items. A detailed description of known functions and configurations incorporated herein will be omitted for the sake of clarity.

According to the present invention, a receiving section and a reproducing section are mechanically separated in order for a user to selectively view satellite digital multimedia broadcast and terrestrial digital multimedia broadcast. That is, the receiving section is configured with a satellite digital multimedia broadcast-based memory card and a terrestrial digital multimedia broadcast-based memory card, both of which can connect to or disconnect from the ME having the reproducing section. The two types of cards include a logic module consisting of a radio frequency unit and a baseband processing/demodulating unit, which are provided in the conventional ME. Since a digital signal processing unit (DSP) for the satellite digital multimedia broadcast and terrestrial digital multimedia broadcast can be shared, the DSP is included inside of the ME. In other words, the DSP includes software for decoding both a satellite digital signal and a terrestrial digital signal.

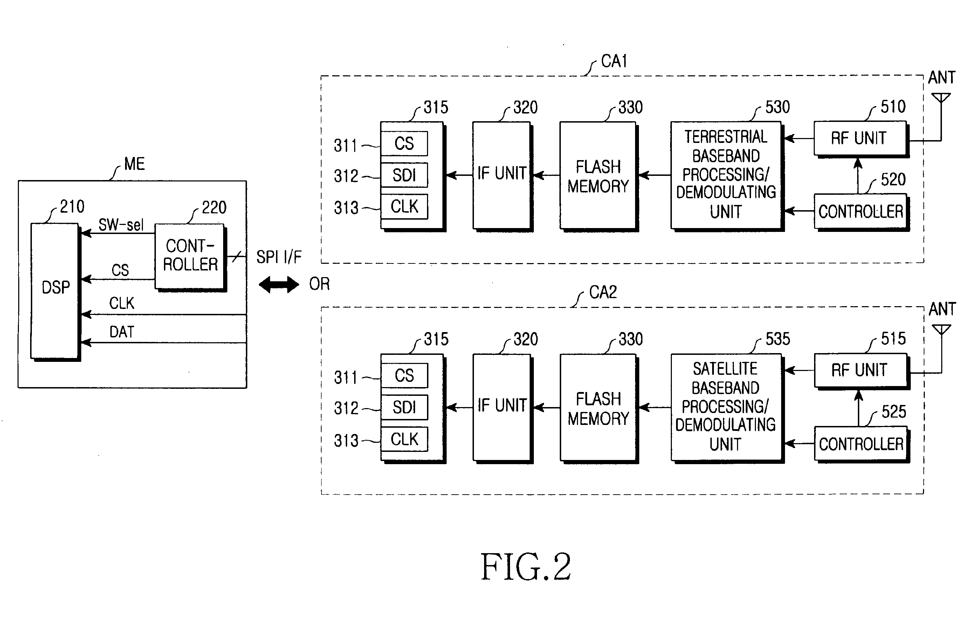

FIG 2 is a block diagram illustrating the structures of a ME for reproducing digital multimedia broadcasts and two cards having different RF and baseband processing units for receiving different digital multimedia broadcasts, according to an embodiment of the present invention. The user can view a desired broadcast by inserting the appropriate card into the ME.

The ME for reproducing digital multimedia broadcasts may be a dedicated terminal or a multi-purpose terminal. The present invention will be described with respect to the multi-purpose terminal.

A first card CA1 and a second card CA2 are a terrestrial card and a satellite card, respectively. Both the first and second card, CA1 and CA2, include a receiving section for receiving a digital multimedia broadcast signal, a memory unit 330 for temporarily storing the digital multimedia broadcast signal, an interface unit 320 for controlling a serial port interface (SPI) interfacing with a ME, and an input/output unit 315 including nodes for inputting/outputting a signal from/to the appropriate card.

The receiving section of the first card CA1 includes an RF unit 510 for receiving a terrestrial digital multimedia broadcast signal through an antenna ANT, a terrestrial baseband processing/demodulating unit 530 for converting the terrestrial digital multimedia broadcast signal into a baseband signal and demodulating the converted signal and a controller 520 for controlling the reception and conversion operations.

The receiving section of the second card CA2 includes an RF unit 515 for receiving a satellite digital multimedia broadcast signal through an antenna ANT, a satellite baseband processing/demodulating unit 535 for converting the satellite digital multimedia broadcast signal into a baseband signal and demodulating the converted signal, and a controller 525 for controlling the reception and conversion operations.

The memory unit 330 may be a flash memory.

The interface unit 320 interfaces the first card CA1 or the second card CA2 with the ME. The interface unit 320 may be realized by using a SPI communication scheme or the like.

The input/output unit 315 includes a chip selection (CS) node 311, a SDI node 312 and a CLK node 313. When the CS node 311 is in an active state, it is possible to transmit data from the first card CA1 or second card CA2 to the ME. The SDI node 312 is used to transmit data from the first card CA1 or second card CA2 to the ME. The CLK node 313 outputs clock signals, which are used for synchronization when data is transmitted from the first card CA1 or second card CA2 to the ME.

The ME includes a DSP unit 210 for processing digital multimedia broadcast video/audio data, and a controller 220. In FIG 2, a display unit and a speaker for outputting final-processed video signals and audio signals, respectively, are not shown. Also not shown are components for other functions such as a communication function when the mobile equipment is a DMB-compatible portable telephone, and a navigation function when the mobile equipment is a navigation terminal, having no connection with the digital multimedia broadcast.

When the first card CA1 or second card CA2 is inserted into the ME, and the CS node of the first card CA1 or second card CA2 is shifted into an active state, the controller 220 outputs a CS signal to the DSP unit 210. Also, when the first card CA1 or second card CA2 is inserted into the ME, the controller 220 checks whether the inserted card refers to a satellite digital multimedia broadcast or a terrestrial digital multimedia broadcast, based on a commend (CMD) signal. Then, based on the result of the check, the controller 220 outputs an algorithm selection (SW-sel) signal for performing an appropriate processing to the DSP unit 210.

A clock signal (CLK) and data (DAT) are input directly to the DSP 210 through the CLK node 313 and the SDI node 312 of the first card CA1 or second card CA2.

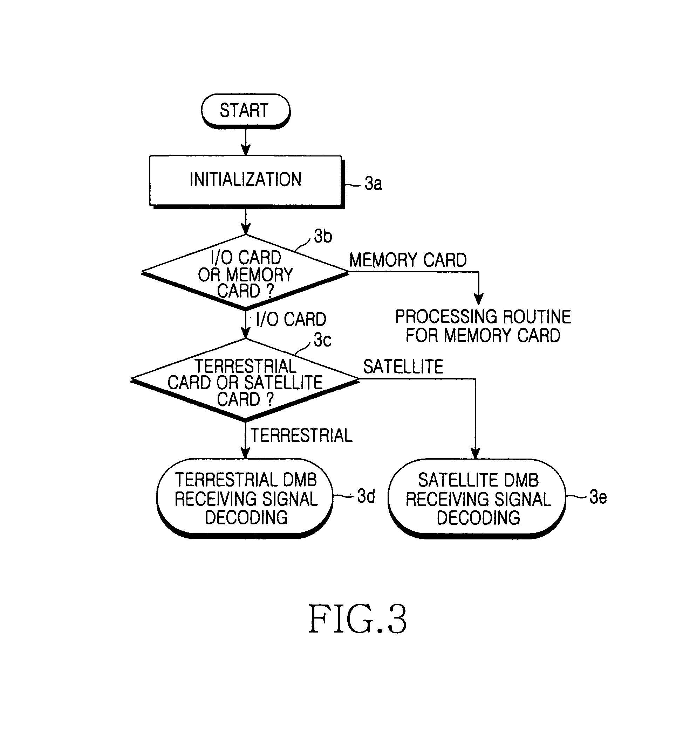

FIG 3 is a flowchart illustrating the procedure for processing satellite digital multimedia broadcast and terrestrial digital multimedia broadcast while distinguishing the satellite digital multimedia broadcast from terrestrial digital multimedia broadcast in the ME for reproducing the digital multimedia broadcast according to the present invention.

When a first card CA1 or second card CA2 is inserted into the ME by the user, the controller 220 senses it, and initializes (e.g. sets a relevant register as a default value) the inserted card in step 3A. In step 3B, the controller 220 checks whether the inserted card is an input/output (I/O) card or a memory card. When the controller determines that the inserted card is an I/O card, the controller 220 proceeds to step 3C, in which the controller 220 checks whether the inserted card is a terrestrial card or satellite card. When the controller determines that the inserted card is a terrestrial card, the controller 220 proceeds to step 3D, in which the controller 220 prepares to decode a terrestrial DMB reception signal. In contrast, when the controller determines in step 3C that the inserted card is a satellite card, the controller 220 proceeds to step 3E, in which the controller 220 prepares to decode a satellite DMB reception signal. Herein, the preparation for signal decoding involves determining either the terrestrial or the satellite DMB reception signal decoding software executed by the DSP 210.

In step 3B or 3C, a CMD can be used to determine which card is inserted into the ME. Since either a SDIO card or an SD memory card may be inserted into an SDIO card slot, it is first determined which of these two types is inserted. Then, it is determined whether the inserted card is a terrestrial card or satellite card according to the next CMD. The CMD can be realized by using software. Hereinafter, the CMD will be described in detail.

An SD card can be used as an SDIO card or normal memory card. Also, the SD card can be used in a normal SD mode or an SPI mode. CMD represents a commend to perform an operation in the SD mode of the SD card. Although not shown, when the SD card is used in an SD mode, data, clock and CMD lines are used. Therefore, actual data is transmitted through the data line, and commends to read and write data are transmitted through the CMD line. It is determined whether a card is used as an SDIO card or a normal memory card according to the CMD. According to the SDIO card standard, a plurality of CMDs to be used have been defined, including CMD5. After the SD card is initialized, the CMD5 is transmitted to the SD card. When a response to the CMD5 is received from the SD card, the SD card is recognized as an SDIO card. After the SD card is recognized as an SDIO card, the type of the SDIO card is determined according to a CMD. The mobile equipment sends a signal to the card to determine the type of DMB card inserted into the ME through the CMD line and determines whether the inserted DMB card is a terrestrial DMB card or a satellite DMB card based on a response signal received through the CMD line. A terrestrial DMB software operates when it is determined that the inserted card is a terrestrial DMB card, and a satellite DMB software operates when it is determined that the inserted card is a satellite DMB card. After such card recognition is finished, mode is shifted from the SD mode to the SPI mode in order to transmit data to the DSP 210.

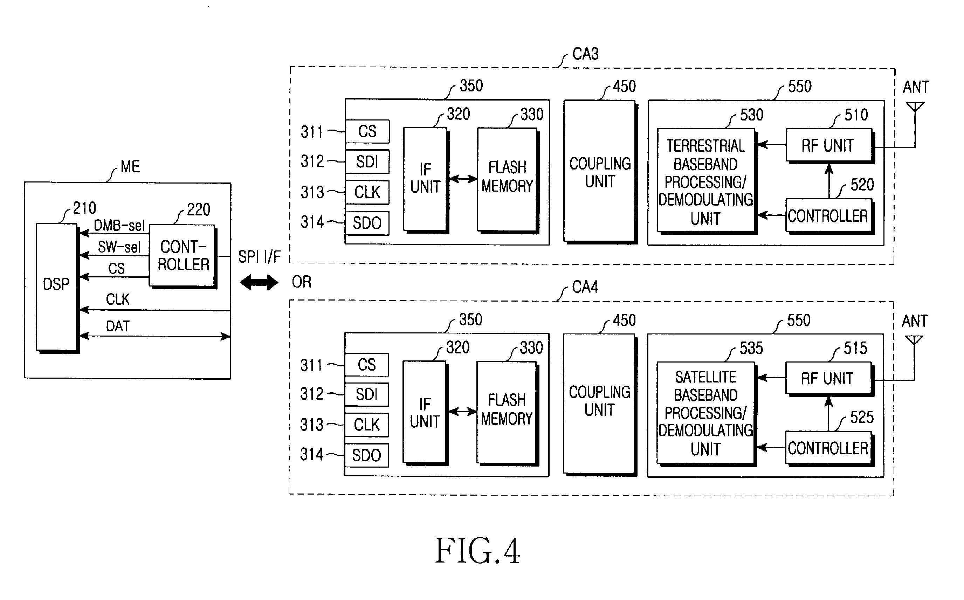

FIG. 4 is a block diagram illustrating the structures of a ME for reproducing digital multimedia broadcasts and two cards for receiving different digital multimedia broadcasts according to the present invention.

Memory cards may be a type of non-volatile memory card, in which stored data are not erased even while power is off. For example, the memory card includes type I/II of a compact flash (CF), a personal computer memory card international association (PCMCIA), a secure digital input output (SDIO) and a normal card. The following description will be given with respect to the SDIO card.

When a DSP chip for processing digital multimedia broadcast video/audio data in a ME is a chip for an SPI communication scheme, it is necessary to use a memory card. The SPI communication scheme enables the SDIO card to be connected with various processors.

When the SDIO card is used in an SPI mode, each node is defined as follows:
A CS node 311 is a chip selection node for data enablement when data is transmitted from CA3 (a terrestrial card) or CA4 (a satellite card) to the ME. A CLK node 313 is a clock node, which is used to synchronize the CA3 or CA4 to the ME when data is transmitted from the CA3 or CA4 to the ME. An SDI node 314 is a node used to transmit data to the CA3 or CA4. Although not shown, according to the SDIO card standard, existing nodes relating to power and reserved nodes may also be included.

A coupling unit 450 functions to couple a card mode 350 and a receiving unit 550. Reference numeral 350 may be configured with the same structure as that of the existing SDIO. However, reference numeral 350 does not form one card by itself, but forms one card together with the coupling unit 450 and the receiving unit 550. Thus, reference numeral 350 is called "SDIO card module". In addition, only the receiving units 550 are separately manufactured for the satellite digital multimedia broadcast and the terrestrial digital multimedia broadcast, but the SDIO card module 350 is shared for the broadcasts. Therefore, the coupling unit 450 may be configured to couple the SDIO card module to a receiving unit for the satellite digital multimedia broadcast or to couple a receiving unit for the terrestrial digital multimedia broadcast to the SDIO card module.

A memory unit 330 may be configured with a flash memory.

As described above, the present invention provides a digital multimedia broadcast receiver, to which two cards using different frequencies can be selectively connected and disconnected, so that the user can easily view both satellite and terrestrial digital multimedia broadcasts with a single receiver through card change.

While the present invention has been shown and described with reference to certain preferred embodiments thereof, it will be understood by those skilled in the art that various changes in form and details may be made therein without departing from the scope of the invention as defmed by the appended claims. Accordingly, the scope of the invention is not to be limited by the above embodiments but by the claims.

## Claims

1. An apparatus for reproducing a digital multimedia broadcast, the apparatus comprising:
a card for receiving a digital multimedia broadcast; and
a terminal for detachable connection with the card so as to receive the digital multimedia broadcast from the card and to reproduce the digital multimedia broadcast.

2. The apparatus as claimed in claim 1, wherein the card comprises:
a receiving unit for receiving and processing a digital multimedia broadcast signal;
a memory for temporarily storing data from the digital multimedia broadcast signal;
an interface unit for interfacing the card and the terminal; and
nodes for transmitting a chip selection signal, data and a clock signal to the terminal.

3. The apparatus as claimed in claim 2, wherein the receiving unit comprises:
a radio section for receiving a radio frequency digital multimedia broadcast signal;
a demodulating section for converting the radio frequency digital multimedia broadcast signal into a baseband signal and demodulating the converted signal; and
a controller for controlling the reception, conversion and demodulation.

4. The apparatus as claimed in one of claims 1 to 3, wherein the terminal comprises:
a controller for outputting a chip selection signal for data enablement, and an algorithm selection signal for decoding a satellite digital multimedia broadcast or a terrestrial digital multimedia broadcast; and
a digital signal processing unit for receiving a clock signal and digital multimedia broadcast data directly from the card, receiving the chip selection signal and the algorithm selection signal from the controller, and processing terrestrial or satellite digital multimedia broadcast video and audio data.

5. The apparatus as claimed in claim 2, wherein the receiving unit receives a terrestrial digital multimedia broadcast signal.

6. The apparatus as claimed in claim 2, wherein the receiving unit receives a satellite digital multimedia broadcast signal.

7. The apparatus as claimed in one of claims 4 to 6, wherein, when the controller senses that the card is inserted, the controller detects a type of the card and outputs an algorithm selection signal for decoding a satellite digital multimedia broadcast or terrestrial digital multimedia broadcast.

8. The apparatus as claimed in claim 7, wherein, to detect the type of the card, the controller determines whether the inserted card is an I/O card or a memory card, and upon determining that the inserted card is an I/O card, the controller determines whether the inserted card is a terrestrial card or a satellite card, through a CMD line.

9. A method for reproducing a digital multimedia broadcast in a terminal, into which a card for receiving the digital multimedia broadcast is detachably inserted, the method comprising the steps of:
sensing that the card is inserted and determining a type of the card;
determining whether a signal to be received is a terrestrial digital multimedia broadcast signal or a satellite digital multimedia broadcast signal, based on the type of the card; and
controlling a terrestrial or satellite digital multimedia broadcast, according to a result of the determination.

10. The method as claimed in claim 9, wherein, the step of analyzing the type of the card comprises the sub-steps of:
determining whether the card is an I/O card or a memory card; and
determining whether the card is a terrestrial card or a satellite card when it is determined that the card is an I/O card.

11. A card for receiving a digital multimedia broadcast, the card comprising:
a receiving unit for receiving and processing a digital multimedia broadcast signal;
a memory for temporarily storing data from the digital multimedia broadcast signal;
an interface unit for interfacing the card and a terminal for reproducing the digital multimedia broadcast when the card is inserted into the terminal; and
a node for transmitting the data to the terminal.

12. The card as claimed in claim 11, wherein the receiving unit comprises:
a radio section for receiving a radio frequency digital multimedia broadcast signal;
a demodulating section for converting the radio frequency digital multimedia broadcast signal into a baseband signal and demodulating the converted signal; and
a controller for controlling the reception, conversion, and demodulation.

13. A detachable card for receiving a digital multimedia broadcast, the card comprising:
a receiving unit for receiving and processing a digital multimedia broadcast signal;
a memory card module having data and control nodes, which are used to transmit a digital multimedia broadcast to a terminal for reproducing the digital multimedia broadcast, controlling interface with the terminal, and temporarily storing digital multimedia broadcast data processed by the receiving unit; and
a coupling unit for coupling the receiving unit with the memory card module.

14. The card as claimed in claim 13, wherein the receiving unit comprises:
a radio section for receiving a radio frequency digital multimedia broadcast signal;
a demodulating section for converting the radio frequency digital multimedia broadcast signal into a baseband signal and demodulating the converted signal; and
a controller for controlling the reception, conversion, and demodulation.

15. The card as claimed in claim 13 or 14, wherein the card is detachably connected to the terminal through a serial port interfacing.

16. The card as claimed in one of claims 13 to 15, wherein the digital multimedia broadcast signal is a terrestrial digital multimedia broadcast signal.

17. The card as claimed in one of claims 13 to 16, wherein the digital multimedia broadcast signal is a satellite digital multimedia broadcast signal.
